# EUROPEAN PATENT SPECIFICATION

(11) **EP 1 777 498 B1**
(45) Date of publication and mention of the grant of the patent: **30.07.2008**
(21) Application number: 06122535.5
(22) Date of filing: 18.10.2006
(51) Int. Cl.: G01C 21/16, G01P 3/80, G01P 3/38, G01C 22/00, G06T 7/20

(54) **Vehicle moving distance detecting method, vehicle moving distance detecting device, current vehicle position detecting method, and current vehicle position detecting device**
Verfahren zur Bestimmung der Fahrzeugbewegungsdistanz, Vorrichtung zur Bestimmung der Fahrzeugbewegungsdistanz, Verfahren zur Bestimmung der aktuellen Fahrzeugposition und Vorrichtung zur Bestimmung der aktuellen Fahrzeugposition
Procédé de détection de la distance de mouvement d'un véhicule, dispositif de détection de la distance de mouvement d'un véhicule, procédé de détection de la position actuelle d'un véhicule et dispositif de détection de la position actuelle d'un véhicule

(30) Priority: 19.10.2005 JP 2005304937
(43) Date of publication of application: 25.04.2007
(73) Proprietor: AISIN AW CO., LTD., Anjo-shi, Aichi 444-1192 (JP)
(72) Inventor: MORI, Toshihiro, Okazaki Aichi 444-8564 (JP); SUGIURA, Hiroaki, Okazaki Aichi 444-8564 (JP); MIYAZAKI, Hideto, Okazaki Aichi 444-8564 (JP); KUBOTA, Tomoki, Okazaki Aichi 444-8564 (JP)
(74) Representative: TBK-Patent

(56) References cited:
- EP-A1- 0 945 319
- EP-A2- 1 158 309
- US-A- 5 642 106
- US-A1- 2002 049 530
- US-A1- 2004 221 790
- US-B1- 6 226 591
- US-B1- 6 285 393
- US-B2- 6 654 670

## Description

### 1. Field of the Invention

The present invention relates to a vehicle moving distance detecting method, a vehicle moving distance detecting device, a current vehicle position detecting method, and a current vehicle position detecting device.

### 2. Description of the Related Art

Conventional vehicle speed sensors for detecting the traveling speed (vehicle speed) provide detection of the traveling distance using the pulse signals. Such a vehicle speed sensor generates pulse signals set such that the interval between the adjacent pulses corresponds to a predetermined moving distance of the vehicle. Accordingly, the vehicle speed sensor outputs pulse signals with an interval corresponding to the vehicle speed. This allows the moving distance of the vehicle to be detected with high precision by counting the pulse signals.

In general, such kinds of vehicle speed sensors have a configuration including a magnet and a magnetoresistive element. Accordingly, in a case of a high vehicle speed, such a vehicle speed sensor outputs pulse signals with a sharp waveform. However, in a case of a low vehicle speed, such a vehicle speed sensor outputs pulse signals with a blunted waveform. As a result, the lower the vehicle speed is, the more blunted the waveform of the pulse signal becomes. Ultimately, such a low vehicle speed leads to a waveform which cannot be detected as pulse signals (losing pulses), resulting in a problem that the moving distance cannot be detected.

In order to solve such a problem, a current vehicle position detecting device has been proposed, which has a function of calculating the moving distance even in a case that the vehicle speed sensor outputs no pulse signal due to such a low speed (even in a case of losing pulses) (see Japanese Patent Application Publication No. JP-A-2000-97713, for example). With the current position detecting device disclosed in the Japanese Patent Application Publication No. JP-A-2000-97713, in a case of losing pulses, the distance, for which the vehicle has moved during losing pulses, is estimated (using the acceleration or the like before or after losing pulses, for example), and the estimated distance is added to the moving distance detected before losing pulses.

However, with the current position detecting device disclosed in the Japanese Patent Application Publication No. JP-A-2000-97713, the moving distance while losing pulses is estimated based upon the acceleration before or after losing pulses, leading to unsatisfactory precision. In particular, the precision of the moving distance thus estimated is insufficient for a navigation device and a driving support device such as parking positioning support device, etc., which require high-precision detection of the current position.

The present invention has been made in view of the aforementioned problems. It is an object thereof to provide a vehicle moving distance detecting method, a vehicle moving distance detecting device, a current vehicle position detecting method, and a current vehicle position detecting device, which have a function of detecting the moving distance and the current position with high precision even in a case of output of no pulse signal from the vehicle speed sensor due to the low vehicle speed.

According to a first aspect of the present invention, in a case that vehicle speed is less than a predetermined reference vehicle speed, image processing is performed for a plurality of image data sets captured at different points in time, and moving distance is calculated based upon the points in time at which the images have been captured and the change between the images. This enables the moving distance of the vehicle to be detected even at a speed too low to detect pulse signals from the vehicle speed sensor.

According to a second aspect of the present invention, in a case that a determining mechanism has determined that vehicle speed is less than a reference vehicle speed, an image data acquisition mechanism acquires a plurality of image data sets captured by an image capturing mechanism at different points in time. Then, a second moving distance calculating mechanism calculates moving distance based upon the plurality of image data sets acquired by the image data acquisition mechanism. This enables the moving distance of the vehicle to be detected even at a speed too low to detect pulse signals from a vehicle speed sensor.

According to a third aspect of the present invention, a determining mechanism makes a determination based upon vehicle speed detected by an existing vehicle speed detecting mechanism for detecting the vehicle speed based upon pulse signals received from a vehicle speed sensor. This eliminates the need to provide an additional and particular vehicle speed detecting mechanism for the determination.

According to a fourth aspect of the present invention, in a case that vehicle speed is less than a predetermined reference vehicle speed, image processing is performed for a plurality of image data sets captured at different points in time, moving distance is calculated based upon the points in time at which the images have been captured and the change between the images, and a current position of the vehicle is updated based upon the moving distance. This enables the moving distance of the vehicle to be detected even at a speed too low to detect pulse signals from the vehicle speed sensor.

According to a fifth aspect of the present invention, in a case that a determining mechanism has determined that vehicle speed is less than a predetermined reference vehicle speed, an image data acquisition mechanism acquires a plurality of image data sets captured by an image capturing mechanism at different points in time. A second moving distance calculating mechanism calculates the moving distance based upon the plurality of image data sets acquired by the image data acquisition mechanism, and outputs the moving distance to a vehicle position calculating mechanism. The second moving distance calculating mechanism calculates the current position of the vehicle based upon the moving distance calculated by the second moving distance calculating mechanism. This enables the moving distance of the vehicle to be detected even at a speed too low to detect pulse signals from the vehicle speed sensor, thereby detecting the current position of the vehicle.

According to a sixth aspect of the present invention, the determining mechanism makes a determination based upon the vehicle speed detected by an existing vehicle speed detecting mechanism for detecting the vehicle speed based upon the pulse signals received from the vehicle speed sensor. This eliminates the need to provide an additional and particular vehicle speed detecting mechanism for the determination.
FIG. 1 is a block diagram for describing the configuration of a driving support device according to the present embodiment;
FIG. 2 is an explanatory diagram for describing a rear camera provided to the vehicle;
FIG. 3 is an explanatory diagram for describing the position of the vehicle at the time of performing the processing according to the present embodiment;
FIG. 4 is a diagram which shows a captured image displayed on a display of the aforementioned driving support device;
FIG. 5 is a schematic diagram for describing creation of a composite image data;
FIG. 6 is an explanatory diagram which shows a composite captured image;
FIG. 7 is an explanatory diagram for describing the image capturing range of the rear camera at the image update position;
FIG. 8 is a diagram which shows a captured image for describing calculation of the moving distance;
FIG. 9A is a diagram which shows two extracted images;
FIG. 9B is a diagram which shows a state in which pattern matching is performed for the two extracted images;
FIG. 10 is a flowchart for describing a processing procedure for performing moving distance computation processing according to the present embodiment; and
FIG. 11 is a flowchart for describing a processing procedure for performing parking support processing.

### DETAILED DESCRIPTION OF THE PREFERRED EMBODIMENTS

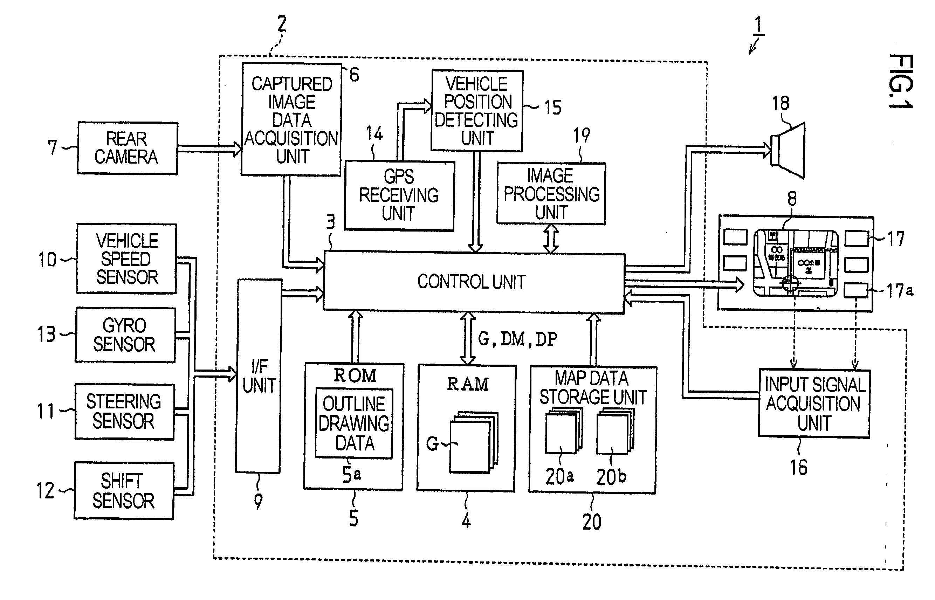

Description will be made below regarding a driving support device having a parking support function according to an embodiment of the present invention with reference to FIGS. 1 through 11. FIG. 1 is a block diagram for describing a configuration of a driving support device 1 mounted on an automobile (vehicle).

As shown in FIG. 1, the driving support device 1 includes a control device 2. The control device 2 includes a control unit 3 for performing main control, RAM 4, and ROM 5. The main control unit 3 performs various kinds of processing according to respective programs such as a moving distance/current position detecting program, a route guidance program, a parking support program, etc. Note that the control unit 3 provides first and second moving distance calculating mechanism, a vehicle position calculating mechanism, a determining mechanism for determination, a vehicle speed detecting mechanism, and an image data acquiring mechanism.

Furthermore, the control device 2 includes a captured image data acquisition unit 6. The captured image data acquisition unit 6 acquires captured image data from a rear camera, which serves as an image capturing mechanism provided to a vehicle C, with a predetermined interval (data acquisition with 30 frames/second in the present embodiment). The captured image data is digital data which has been subjected to analog/digital conversion by the rear camera 7. The captured image data acquisition unit 6 transmits the digital data to the control unit 3 in the form of image data G which can be subjected to image processing such as various kinds of correction, creation of a composite image, etc. Upon reception of the image data G, the control unit 3 temporarily stores the image data G in the RAM 4 in correlation with the current position DP calculated in cooperation with a vehicle position detection unit 15 described later.

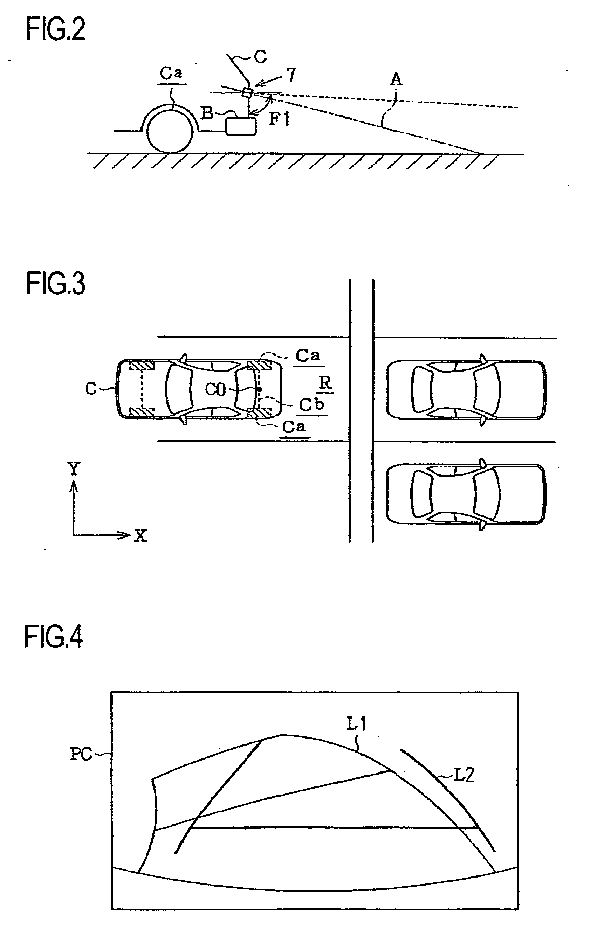

The rear camera 7 is mounted at approximately the center of the rear end of the vehicle C such as a trunk, a back door, or the like, of the vehicle C, with the optical axis A being directed downward, as shown in FIG. 2. The rear camera 7 includes an optical configuration comprising a wide angle lens, a mirror, and so forth, and a CCD image capturing device (neither is shown). The wide angle lens has a rear view in an angle range of 140° in the horizontal direction. This enables the rear camera 7 to capture images in a backward image capturing range F1 (peripheral field of view) of approximately 8 m including the rear end of the vehicle C. Note that the rear camera 7 employs a wide angle lens. If the image data G is displayed on a display 8 provided in view of the driver, shrinking of the image at the perimeter of the screen, i.e., so-called distortion aberration, occurs.

Furthermore, the control device 2 includes a sensor interface (I/F unit) 9. The control unit 3 acquires a vehicle speed signal (pulse signal) PS from a vehicle speed sensor 10 provided to the vehicle C through the I/F unit 9. The vehicle speed sensor 10 according to the present embodiment is a vehicle speed sensor having a configuration which includes a magnet and a magnetoresistive element. Accordingly, in a case that the vehicle speed Vn is high, the magnetoresistive element outputs pulse signals with a sharp waveform. However, in a case that the vehicle speed Vn is low, the magnetoresistive element outputs pulse signals with a blunted waveform. The control unit 3 computes the vehicle speed Vn at each point in time based upon the pulse signals PS.

The control unit 3 computes the moving distance DM and the current position DP of the vehicle based upon the pulse signals PS. Here, the control unit 3 performs computation of the moving distance DM according to the moving distance/current position detecting program stored in the ROM 5. Furthermore, the control unit 3 has a function of switching the detecting method for the moving distance DM with a reference vehicle speed Vk, which has been determined beforehand by calculating the vehicle speed Vn based upon the pulse signals PS, as a threshold. Specifically, the reference vehicle speed Vk is the vehicle speed Vn which is immediately higher than the vehicle speed at which the vehicle speed sensor 10 cannot output the pulse signals PS, i.e., the vehicle speed somewhat higher than that which leads to so-called losing pulses. That is to say, the reference vehicle speed Vk is the minimum speed that allows the vehicle speed Vn to be calculated based upon the pulse signals PS. Description will be made in the present embodiment regarding an arrangement with the reference vehicle speed Vk of 3.2 km/h. The reference vehicle speed Vk is stored beforehand in the ROM 5.

In a case that the vehicle C moves at a speed of the reference vehicle speed Vk or more, the control unit 3 enters the "normal detecting mode". In this mode, the control unit 3 calculates the moving distance DM at each point in time by counting the pulse signals PS output from the vehicle speed sensor 10. On the other hand, in a case that the vehicle C moves at a speed less than the reference vehicle speed Vk, the control unit 3 enters the "low speed detecting mode". In this mode, the control unit 3 calculates the current moving distance DM by performing image processing for the image data G which have been acquired from the captured image data acquisition unit 6, and which have been captured by the rear camera 7 at different points in time. Then, the control unit 3 stores the moving distance DM and the current position DP, which has been computed in either detecting mode, in a predetermined storage area of the RAM 4. Accordingly, such a storage area is prepared beforehand in the RAM 4.

Furthermore, the control device 2 is connected, through the I/F unit 9, to a steering sensor 11 and a shift sensor 12 that are provided to the vehicle C. The steering sensor 11 is a sensor for detecting the steering angle of the steering wheel (steering angle) at each point in time. The steering sensor 11 detects the steering angle based upon the steering angle signal STR. The shift sensor 12 is a sensor for detecting the shift position of the shift lever of the transmission at each point in time. The shift sensor 12 detects the reverse state based upon the shift position signal NSW. That is to say, the control unit 3 acquires the steering signal STR from the steering sensor 11. Furthermore, the control unit 3 acquires the shift position signal NSW from the shift sensor 12. Then, the control unit 3 temporarily stores the steering angle and the shift position in a predetermined storage area of the RAM 4 for each point in time.

The control unit 3 determines whether or not the shift position of the transmission is in the reverse state based upon the shift position signal NSW When the shift position is "reverse" in a mode for simply displaying the image around the rear side of the vehicle C (which will be referred to as "first parking support mode), the control unit 3 displays the captured image PC shown in FIG. 4 on the display 8 based upon the image data G captured by the rear camera 7 according to the parking support program stored in the ROM 5. In this mode, the captured image PC includes the background with respect to the vehicle C. Furthermore, a predicted course curve L1 and an extended vehicle width curve L2 are superimposed on the background based upon the steering angle signal STR using a known method. Here, the predicted course curve L1 represents the moving course calculated based upon the steering angle and the width of the vehicle C. On the other hand, the extended vehicle width curve L2 serves as an indicator, which is obtained by extending the width of the vehicle C backward. Such an arrangement allows the driver to steer the vehicle for parking based upon deviation of the predicted course curve L1 and the extended vehicle width curve L2 from the desired ones.

The control device 2 is connected to a gyro sensor 13 provided to the vehicle C through the I/F unit 9. The control unit 3 acquires the relative direction information with respect to the vehicle C from the gyro sensor 13.

Furthermore, the control device 2 includes a GPS receiving unit 14 and a vehicle position detecting unit 15. The GPS receiving unit 14 receives radio waves from the GPS satellites. The vehicle position detecting unit 15 calculates the position data, which represents the absolute position of the vehicle, such as the latitude, the longitude, and the altitude, etc., of the vehicle, based upon the detected data received from the GPS receiving unit 14 with a predetermined interval. The vehicle position detecting unit 15 acquires the moving distance DM and the relative direction of the vehicle C calculated by the control unit 3. Then, the vehicle position detecting unit 15 calculates the current position DP based upon the moving distance DM and the relative direction with the reference current position, which has been calculated based upon the direction data from the GPS receiving unit 14, as the base, using an autonomous navigation method. At this time, the vehicle direction detecting unit 15 calculates the center Co of the axle shaft Cb for the rear wheels Ca of the vehicle C in the form of a coordinate point on the XY coordinate system, as shown in FIG. 3. Then, the vehicle position detecting unit 15 corrects the position of the vehicle based upon the direction data successively acquired from the GPS receiving unit 14 using an autonomous navigation method, thereby determining the current position DP. Note that the XY coordinate system for the vehicle is a coordinate system for indicating the vehicle C on the road (road coordinate system).

The control device 2 includes an input signal acquisition unit 16. The input signal acquisition unit 16 acquires the input signal input by the touch panel operation through the display 8, and transmits the input signal to the control unit 3. Furthermore, operation buttons 17 are provided at a portion adjacent to the display 8, one of which is an image switching button 17a. In a case of parking the vehicle C in the parking target region R or the like as shown in FIG. 3, for example, in some cases, a part of the parking target region R is out of the screen of the display 8, leading to a difficulty in visual confirmation. In this case, the driver operates the image switching button 17a. Upon operating the image switching button 17a, the input signal acquisition unit 16 generates a composite image creation start signal. This switches the mode of the control unit 3 from the "first parking support mode" to the "second parking support mode". In the "second parking support mode", the control unit 3 starts creation of a composite image based upon each image data G and output processing.

Furthermore, the driving support device 1 includes a speaker 18. The speaker 18 outputs various kinds of voice guidance or audio guidance based upon the audio output signal transmitted from the control unit 3.

The control device 2 includes an image processing unit 19. The image processing unit 19 receives each image data G from the control unit 3, and corrects the distortion aberration occurring in each image data G due to the wide angle lens. In a case that the control unit 3 enters the aforementioned "second parking support mode", the image processing unit 19 merges an image data G, which has been newly acquired at the current position DP (which will be referred to as the "new image data G1" hereafter), with another image data G, which has been acquired before the acquisition of the new image data G1 (which will be referred to as the "past image data G2" hereafter), each of which has been acquired according to a composite image creation command received from the control unit 3. Here, the past image data G2, which is to be merged with the new image data G1, is an image data G which has been captured at a position distanced from the current position by a predetermined distance (reference distance DMk) in the vehicle coordinate system.

Specifically, the image processing unit 19 according to the present embodiment merges the lower half H1 of the new image P1 of the new image data G1 with the lower half H2 of the past image P2 of the past image data G2. Then, the image processing unit 19 displays the composite image thus created on the display 8 in the form of a single captured image PC (which will be referred to as the "composite captured image PCA" hereafter). At this time, the image processing unit 19 performs data signal processing for the image data G1a of the lower half H1 of the new image P1 and the image data G2a of the lower half H2 of the past image P2 such that the consecutive regions extracted from the image data G1 and the past image data G2 (i.e., the lower half H1 of the new image P1 and the lower half H2 of the past image P2) are continuously connected to one another. Thus, a composite image data GA of the composite captured image PCA is created.

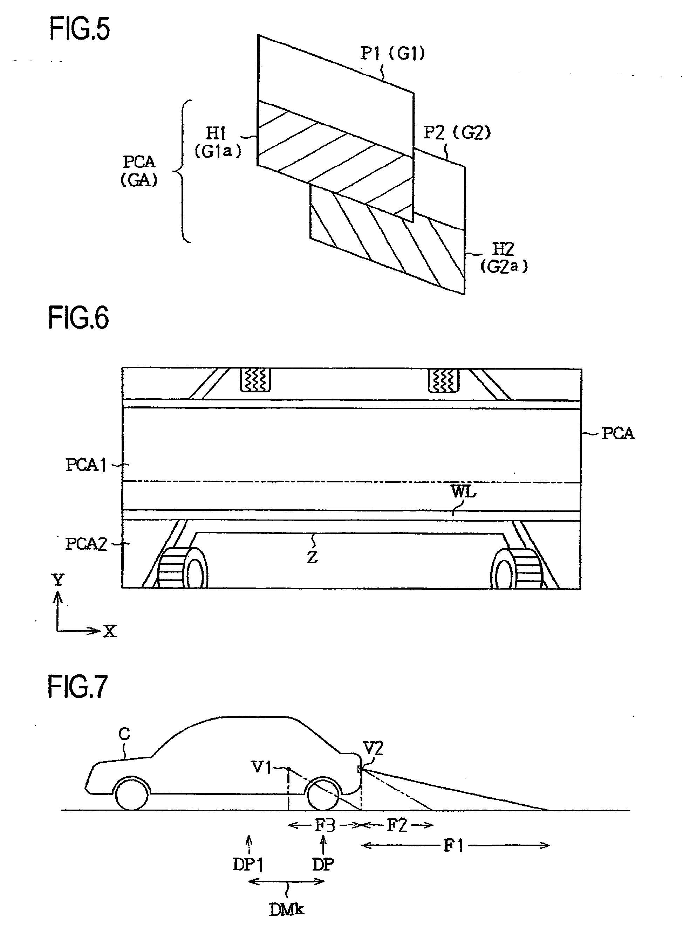

Before the creation of the composite image data GA formed of the consecutive regions, the image processing unit 19 reads out the image data (past image G2), which has been captured at a previous position distanced from the current position DP by the aforementioned reference distance DMk, and which is suitable for the processing for continuously connecting the regions, from the RAM 4. FIG. 6 shows a composite captured image PCA created based upon the composite image data GA. The composite captured image PCA consists of a new image part PCA1 created based upon the image data G1a of the lower half H1 of the new image P1 and a past image part PCA2 created based upon the image data G2a of the lower half H2 of the past image P2, which are displayed such that they are continuously connected to one another. Here, the reference distance DMk is stored beforehand in the ROM 5.

The new image part PCA1 is a background image with respect to the vehicle C, which corresponds to the region F2 viewed from the viewpoint V2 of the camera located at the current position DP, as shown in FIG. 7. On the other hand, the past image part PCA2 is an image of the region which disappears behind the bottom of the vehicle C at the current position DP. Accordingly, the image of such a region cannot be captured by the camera with the viewpoint V2 corresponding to the current position. That is to say, the past image part PCA2 is an image of the region F3 captured by the rear camera 7 with the viewpoint V1 corresponding to the previous position DP1 distanced from the current position by the reference distance DMk, as shown in FIG. 7. As shown in FIG. 6, the past image part PCA2 includes the image of a white line WL and so forth which disappear behind the bottom of the vehicle body in reality. With the present embodiment, the past image part PCA2 is displayed, thereby providing an image in which the road face, which disappears behind the bottom of the vehicle in reality, is displayed as if the vehicle body has become translucent. The composite captured image PCA is updated for each movement of the vehicle C by the reference distance DMk.

Furthermore, the ROM 5 stores outline drawing data 5a. In a case of displaying the composite captured image PCA on the display 8 in the aforementioned "second parking support mode" as shown in FIG. 6, the outline drawing data 5a is used for displaying the outline Z of the vehicle C on the display 8. Here, the outline drawing data 5a is set corresponding to the size of the vehicle C. In a case that the vehicle C is a compact vehicle, the outline Z of the compact vehicle is displayed with a size corresponding to the screen.

On the other hand, in a case that the control unit 3 enters the aforementioned "low speed detecting mode", the image processing unit 19 performs image processing for calculating the moving distance DM at each point in time according to a command from the control unit 3.

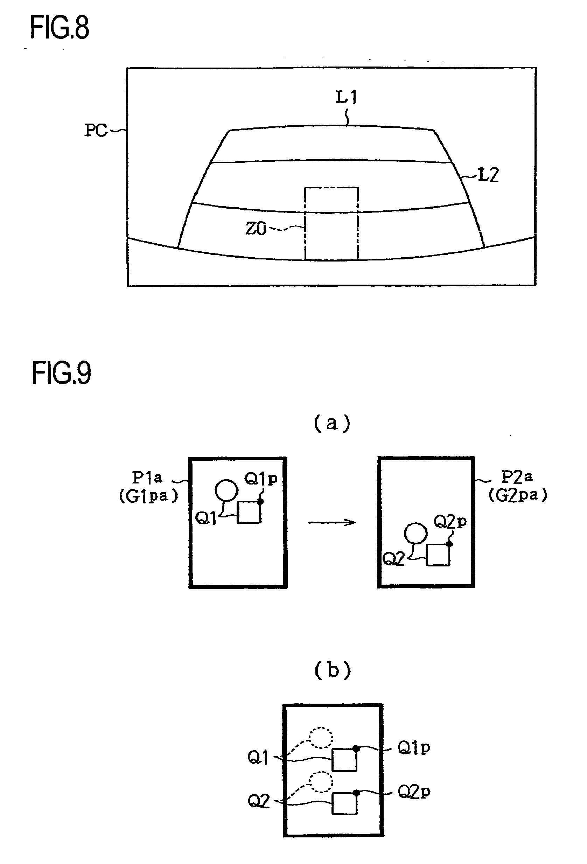

The image processing unit 19 makes a comparison between the new image data G1 of the new image P1, which is to be stored in the RAM 4 according to the control of the control unit 3, and the past image data G2 of the past image P2 already stored in the RAM 4 in the storage process immediately prior to the storage of the new image data G1 in the RAM 4. The image processing unit 19 extracts the image data corresponding to a predetermined region of the new image data G1 (which will be referred to as the "extracted new image data G1pa" hereafter). At the same time, the image processing unit 19 extracts the image data corresponding to a predetermined region of the past image data G2 (which will be referred to as the "extracted past image data G2pa" hereafter). The term "predetermined region" as used here represents a detecting region Z0 which is enclosed by a predetermined alternate long and two short dashes line superimposed on the captured image PC displayed on the display 8 based upon the image data G captured by the rear camera 7 as shown in FIG. 8.

As shown in FIG. 9A, the image processing unit 19 performs image processing such as Fourier transformation, binary processing, edge detection, etc., for the extracted new image P1a created based upon the extracted new image data G1pa and the extracted past image P2a created based upon the extracted past image data G2Pa, thereby providing enhancement of the new pattern Q1 and the past pattern Q2. Then, the image processing unit 19 performs pattern matching for the extracted new image P1a and the extracted past image P2a thus subjected to pattern enhancement. As shown in FIG. 9B, the image processing unit 19 obtains the coordinates values (coordinate points on the display 8 (screen coordinate points)) of the feature points Q1p and Q2p for the new and past patterns Q1 and Q2, respectively, by performing pattern matching. The control unit 3 transforms the screen coordinate values of the feature points Q1p and Q2p thus obtained into the road coordinate values. In this step, coordinate transformation is performed while correcting the distortion and so forth occurring due to the wide angle lens of the rear camera 7. The image processing unit 19 calculates the distance between the feature points Q1p and Q2p transformed into the road coordinate values, thereby calculating the distance (unit moving distance M1) by which the vehicle has moved from the point in time at which the past image data G2 has been acquired immediately previous to the acquisition of the new image data G1 up to the point in time at which the new image data G1 has been acquired.

The control unit 3 stores the unit moving distance M1 in the RAM 4. Furthermore, the control unit 3 adds the unit moving distance M1 to the moving distance DM which has been stored in the RAM 4, and which is a moving distance with a predetermined position as the start point (update of the moving distance). The moving distance (= DM + M1) thus obtained is stored in the RAM 4 as the new moving distance DM. Furthermore, the control unit 3 updates the current position DP as the new current position DP based upon the updated new moving distance DM.

Furthermore, the control device 2 includes a map data storage unit 20. The map data storage unit 20 stores route data 20a and map drawing data 20b as map data. The route data 20a stores: node data which indicates the intersections, curve points, and so forth, for each road; link data which indicates each link between the nodes; etc. At the time of the guidance processing for the route to the target point, the control unit 3 searches for the route based upon the route data 20a according to the route guidance program stored in the ROM 5. Furthermore, the control unit 3 determines the current position coordinate point on a suitable road with reference to the coordinate point of the current position DP calculated as described above, the traveling course, and the route data 20a, thereby further correcting the vehicle position data. The map drawing data 20b is the data which allows the map to be displayed from a wide range up to a narrow range, which is associated with the route data 20a. With such an arrangement, in a case that the shift position of the transmission is not "reverse", the control unit 3 superimposes the vehicle position mark or the like on a map image 8a around the vehicle (see FIG. 1) displayed on the display 8 based upon the map drawing data.

Next, description will be made regarding the operation of the driving support device 1 according to the present embodiment.

### [Moving distance and current position detection]

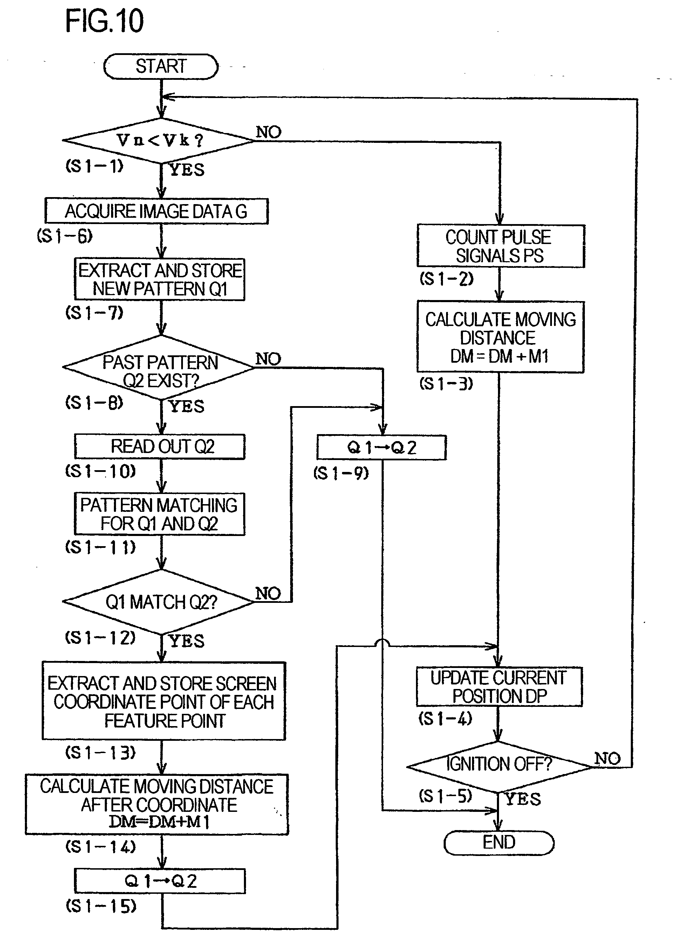

First, description will be made regarding the detection of the moving distance DM and the current position DP executed by the control device 2 according to the moving distance/current position detecting program stored in the ROM 5, with reference to the flowchart shown in FIG. 10. Note that, upon turning on the ignition switch, this processing starts. On the other hand, upon turning off the ignition switch, this processing ends.

When the moving distance/current position detecting program starts according to turning on of the ignition switch, the control unit 3 determines whether or not the current vehicle speed Vn is less than the reference vehicle speed Vk (step S1-1). The control unit 3 calculates the current vehicle speed Vn based upon the pulse signals PS from the vehicle speed sensor 10. In a case that the current vehicle speed Vn is equal to or greater than the reference vehicle speed Vk, the control unit 3 enters the "normal detecting mode", and the flow proceeds to step S1-2 where the control unit 3 counts the pulse signals PS received from the vehicle speed sensor 10.

The control unit 3 calculates the sum of the unit moving distance M1 of the vehicle C that corresponds to a single pulse signal PS and the moving distance DM, thereby calculating a new moving distance DM (= DM + M1). Thus, the control unit 3 updates the moving distance DM stored in the RAM 4 (step S1-3). Subsequently, the control unit 3 calculates the new current position DP using the moving distance DM thus updated, thereby updating the current position DP stored in the RAM 4 (step S1-4). That is to say, the control unit 3 outputs the moving distance DM thus calculated to the vehicle position detecting unit 15, and calculates the current position DP in cooperation with the vehicle position detecting unit 15. Furthermore, the control unit 3 replaces the current position DP previously stored in the RAM 4 with the current position DP thus calculated.

Upon completion of the update of the moving distance DM and the current position DP, the control unit 3 checks whether or not the ignition switch is off (step S1-5). In a case that the ignition switch is on (in a case of "NO" in step S1-5), the flow returns to step S1-1, and the control unit 3 performs the processing for calculating a new moving distance and so forth. Conversely, in a case that the ignition switch is off (in a case of "YES" in step S1-5), the detecting processing for the moving distance DM and the current position DP ends according to the control of the control unit 3.

On the other hand, in a case that the current vehicle speed Vn is less than the reference vehicle speed Vk in the aforementioned step S1-1 (in a case of "YES" in step S1-1), the control unit 3 enters the "low speed detecting mode", and the flow proceeds to step S1-6. The control unit 3 acquires the current image data G from among the images captured by the rear camera 7 (step S1-6). The control unit 3 drives the rear camera 7 through the captured image data acquisition unit 6 so as to acquire the current image data G (new image data G1). On the other hand, in a case that the rear camera 7 is in a driving state and the control unit 3 is in the "first parking support mode" or the "second parking support mode", the control unit 3 immediately acquires the current image data G (new image data G1).

The control unit 3 controls the image processing unit 19 to extract a new pattern Q1 in a predetermined region from the new image data G1, and stores the new pattern Q1 in the RAM 4 (step S1-7). Specifically, the control unit 3 outputs the new image data G1 to the image processing unit 19, and instructs the image processing unit 19 to extract the extracted new image data G1pa in the predetermined region from the new image data G1 and to obtain a new pattern Q1 in the predetermined region enhanced based upon the extracted new image data G1pa. Then, the control unit 3 stores the data of the new pattern Q1 of the predetermined region thus obtained by the image processing unit 19 in RAM 4.

Upon completion of the storage of the new pattern Q1, which has been enhanced based upon the extracted new image data G1pa, in the RAM 4, the control unit 3 determines whether or not the RAM 4 stores the past pattern Q2 which has been obtained by enhancing the image data (extracted past image data G2pa) of the predetermined region obtained based upon the image data G (past image data G2) of one frame before (step S1-8). That is to say, before pattern matching, the control unit 3 determines whether or not there is the past pattern Q2 enhanced based upon the past image data G2 of one frame before, which has been captured by the rear camera 7. In a case that there is no past pattern Q2 for comparison (in a case of "NO" in step S1-8), the control unit 3 replaces the past pattern Q2 with the new pattern Q1 (step S1-9). Subsequently, the flow returns to the step S1-1 through the step S1-5, whereupon the control unit 3 acquires the new image data G1, and creates a new pattern Q1 based upon the new image data G1.

On the other hand, in a case that there is the past pattern Q2 for comparison (in a case of "YES" in step S1-8), the control unit 3 reads out the data of the past pattern Q2 previously stored from the RAM 4 (step S1-10). Subsequently, the control unit 3 instructs the image processing unit 19 to execute pattern matching between the new pattern Q1 created by the image processing unit 19 according to the control of the control unit 3 and the past pattern Q2 (step S1-11). Then, the control unit 3 determines whether or not the two patterns match one another (step S1-12).

In a case that the new pattern Q1 matches the past pattern Q2 (in case of "YES" in step S1-12), the control unit 3 instructs the image processing unit 19 to select the feature points Q1a and Q2a, which correspond to one another, from the portions of the new pattern Q1 and the past pattern Q2 which match one another. Subsequently, the control unit 3 obtains the coordinate values (in the screen coordinate system) of the feature points Q1a and Q2a, and stores the coordinate values of the feature points Q1a and Q2a in the RAM 4 (step S1-13).

The control unit 3 transforms the screen coordinate values of the feature points Q1a and Q2a thus obtained into the road coordinate values. Then, the control unit 3 calculates the distance (unit moving distance M1) between the feature points Q1a and Q2a transformed into the road coordinate values, and updates the moving distance DM (= DM + M1) (step S1-14). Subsequently, the control unit 3 replaces the past pattern Q2 with the new pattern Q1 (step S1-15). Then, the flow proceeds to step S1-4 where the control unit 3 obtains the new current position DP using the moving distance DM thus updated, and updates the current position DP stored in the RAM 4.

On the other hand, in a case that the new pattern Q1 and the past pattern Q2 do not match one another (in a case of "NO" in step S1-12), the control unit 3 determines that determination cannot be made whether or not the vehicle moves. In this case, the flow returns to step S1-5 through step S1-9, and the control unit 3 performs the processing for the calculation of a new moving distance.

As described above, in a case that the current vehicle speed Vn is less than the reference vehicle speed Vk, the driving support device 1 according to the present embodiment calculates the moving distance DM and the current position DP at each point in time based upon the image data G of the images captured by the rear camera 7. This enables the driving support device 1 to detect the moving distance DM and the current position DP with high precision even in a case that the vehicle speed is too low for the vehicle speed sensor 10 to output the pulse signals PS.

### (Parking support)

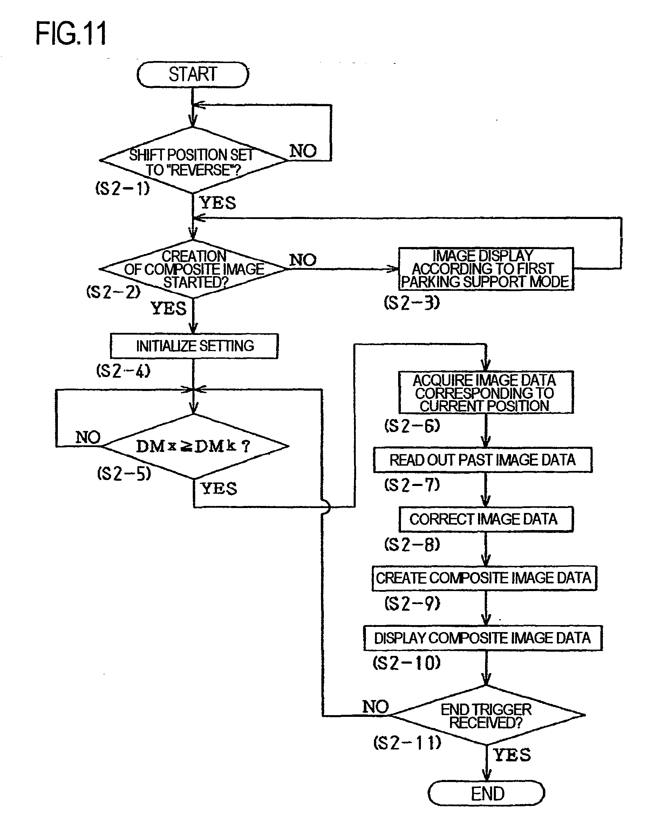

Next, description will be made regarding parking support executed by the control device 2 according to a parking support program stored in the ROM 5 with reference to the flowchart shown in FIG. 11. Upon setting the shift position to "reverse", this processing starts.

The control unit 3 determines whether or not the shift position is "reverse" (step S2-1). In a case that the shift position is "reverse" (in a case of "YES" in step S2-1), the control unit 3 determines whether or not the creation of a composite image is to be started (step S2-2). Determination is made whether or not the creation of a composite image is to be started, based upon whether or not the image switching button 17a is operated.

In a case that the image switching button 17a has not been operated (in a case of "NO" in step S2-2), the control unit 3 determines that creation of a composite image is not to be performed, i.e., the parking support mode is the "first parking support mode". In this case, the control unit 3 acquires the newest image data G1 from the RAM 4, and superimposes a predicted course curve 31 and an extended vehicle width curve 32 on the image, whereby the captured image PC including the backward image as shown in FIG. 4 is displayed on the display 8 (step S2-3). In this case, the control unit 3 is standing by to receive a composite image creation start signal while updating the captured image PC by successively acquiring the image data G.

On the other hand, in a case that determination has been made that the driver has operated the image switching button 17a, i.e., creation of a composite image is to be started (in a case of "YES" in step S2-2), the control unit 3 enters the "second parking support mode" where the control unit 3 performs initial setting of the current position that serves as the reference point of the vehicle C (step S2-4). The control unit 3 reads out the moving distance DM and the current position DP stored in the RAM 4 by performing the processing operation described above. Then, the control unit 3 stores the moving distance DM and the current position DP thus read out in a predetermined storage area in the RAM 4 as an initial moving position DM0 and an initial current position DPO, respectively.

Subsequently, the control unit 3 determines whether or not the vehicle has moved from the position (initial moving position DM0), at which the image switching button 17a has been operated, by a predetermined reference distance DMk (step S2-5). Here, determination is made as follows. That is to say, first, the difference between the initial moving position DM0 and the moving distance DM stored in the RAM 4 is calculated (= DM - DM0) for each point in time. Then, determination is made based upon whether or not the difference (image update moving distance DMx) has reached the predetermined reference distance DMk. The reference distance DMk is a distance that corresponds to the timing of newly displaying or updating the composite captured image PCA on the display 8, which has been created based upon the image data G2a of the lower half H2 of the past image P2 stored in the RAM 4 and the image data G1a of the lower half H1 of the new image P1 newly acquired. Specifically, the reference distance DMk is set to approximately 50 cm in the present embodiment.

In a case that the image update moving distance DMx is less than the reference distance DMk (in a case of "NO" in step S2-5), the control unit 3 waits for the image update moving distance DMx to reach the reference distance DMk. Then, in a case that the image update moving distance DMx (= DM - DM0) has reached the reference distance DMk (in a case of "YES" in step S2-5), the control unit 3 acquires the image data G (new image data G1) at the current position from the RAM 4 (step S2-6). Subsequently, the control unit 3 searches for the image data G (past image data 2G) captured at the position (initial moving position DM0) at which the image switching button 17a has been operated, and reads out the past image data G2 thus selected from the RAM 4 (step S2-7).

The control unit 3 transmits a composite image creation command to the image processing unit 19, which instructs the image processing unit 19 to execute correction of the image data G1 and G2 (step S2-8). That is to say, the image processing unit 19 corrects the distortion aberration of each data set G. Upon completion of the correction, the control unit 3 instructs the image processing unit 19 to merge the image data G1 and G2 thus subjected to the distortion aberration correction. Specifically, the image processing unit 19 creates composite image data GA of the composite captured image PCA having an image structure in which the lower half H1 of the new image P1 and the lower half H2 of the past image P2 are continuously merged based upon the image data G1 and the past image data G2.

The control unit 3 displays the composite image data GA thus created on the display 8 (step S2-10). Thus, the composite image data GA as shown in FIG. 6 is displayed on the display 8 as described above. That is to say, such an arrangement provides an image in which the road face, which disappears behind the bottom of the vehicle in reality, is displayed as if the vehicle body of the vehicle C has become translucent.

At this time, the image processing unit 19 superimposes a vehicle outline 41 on the image using the outline drawing data 5a stored in the ROM 5. Such an arrangement allows the driver to confirm the relative position or the difference in position of the vehicle from the parking target region R, and to confirm the relative distance between the vehicle and an obstacle by visual confirmation of the current position of the vehicle C and the parking target region R included in the composite captured image PCA displayed on the display 8.

Furthermore, the control unit 3 determines that an end trigger has been received (step S2-11). In this determination step, the control unit 3 determines whether or not the image switching button 17a has been operated, whether or not the shift position is switched from "reverse" to "drive" or "parking", and whether or not the off signal has been received from the ignition module. In a case that no end trigger has been received (in a case of "NO" in step S2-11), the flow returns to step S2-5, the aforementioned processing is repeatedly performed. Such an arrangement provides the composite captured image PCA updated for each movement of the vehicle by the reference distance DMk of 50 cm, for example. In a case of receiving the end trigger (in a case of "YES" in step S2-11), the parking support program ends according to the control of the control unit 3.

The aforementioned embodiment provides the following effects.
(1) With the aforementioned embodiment, in a case that the current vehicle speed Vn is less than the reference vehicle speed Vk, the moving distance DM and the current position DP are calculated based upon the image data G1 and G2 of the images captured by the rear camera 7 at each point in time. Such an arrangement enables the moving distance DM and the current position DP to be detected with high precision even in a case that the vehicle speed is too low for the vehicle speed sensor 10 to output the pulse signals PS (i.e., in a case of losing pulses).
(2) With the aforementioned embodiment, the image update moving distance DMx (= DM - DM0) is calculated based upon the moving distance DM obtained in a suitable parking support mode selected from among two kinds of the parking support modes, i.e., the "normal detecting mode" and the "low speed detecting mode", according to the vehicle speed Vn. In many cases, the vehicle moves at a low speed of the reference vehicle speed Vk or less in the "second parking support mode". In this case, such an arrangement provides the image update moving distance DMx (= DM - DM0) calculated based upon the moving distance DM obtained with high precision in the "low speed detecting mode".
   This provides the high-precision composite captured image PCA on the display 8, thereby enabling the parking support to be made in a sure manner.
(3) With the aforementioned embodiment, the reference vehicle speed Vk, which is a threshold for switching the parking support mode to the "low speed detecting mode", is set to the vehicle speed Vn which is immediately higher than the vehicle speed at which the vehicle speed sensor 10 cannot output the pulse signals PS, i.e., the vehicle speed somewhat higher than that which leads to so-called losing pulses. That is to say, the reference vehicle speed Vk is set to the minimum speed that allows the vehicle speed Vn to be calculated based upon the pulse signals PS. This allows the detecting mode to be switched between the "low speed detecting mode" and the "normal detecting mode" using the vehicle speed sensor 10 alone without involving any additional particular vehicle speed sensor.

Also, the aforementioned embodiments may be modified as follows.
- While description has been made in the aforementioned embodiment regarding an arrangement having a function of calculating the moving distance DM and the current position DP at the time of reverse movement of the vehicle, the present invention is not restricted to such an arrangement. The present invention may be applied to an arrangement having a function of calculating the moving distance and the current position at the time of forward movement of the vehicle in the same way.
- Description has been made in the aforementioned embodiment regarding an arrangement in which the moving distance DM is calculated at all times in a suitable detecting mode selected from among the "normal detecting mode" and the "low speed detecting mode" based upon the vehicle speed Vn. Also, an arrangement may be made in which, only in a case that the parking support mode has been switched to the "second parking support mode", which has been described in the aforementioned embodiment, the moving distance DM and the current position DP are calculated in a suitable detecting mode selected from among the "normal detecting mode" and the "low speed detecting mode" based upon the current vehicle speed Vn.
- Description has been made in the aforementioned embodiment regarding an arrangement in which the vehicle speed (reference vehicle speed) that serves as a threshold for selecting a suitable detecting mode from among the normal detecting mode and the low speed detecting mode is set to 3.2 km/h. Also, the threshold vehicle speed may be changed as appropriate.
- Description has been made in the aforementioned embodiment regarding an arrangement having a function of parking support for parking by reverse movement using the camera 7. Also, the present invention may be applied to an arrangement having a function of parking support for parking by forward movement.
- Description has been made in the aforementioned embodiment regarding an arrangement in which the vehicle speed is calculated based upon the image data captured by the rear camera 7. Also, an arrangement may be made in which the moving distance DM and the image update moving distance DMx are obtained based upon the image data captured by another peripheral camera provided to the vehicle, instead of the rear camera 7.
- Description has been made in the aforementioned embodiment regarding an arrangement in which the moving distance DM is obtained in a suitable detecting mode selected from among the "normal detecting mode" and the "low speed detecting mode" based upon the vehicle speed Vn, and the moving distance DM thus obtained is used for parking support. However, the present invention is not restricted to such an arrangement. For example, the present invention may be applied to a control mechanism that requires the moving distance calculated with high precision such as route guidance which requires the moving distance DM calculated with high precision at each point in time.
- Description has been made in the aforementioned embodiment regarding an arrangement in which the composite image data GA of the composite captured image PCA is created based upon the image data G1 and the past image data G2 such that it has an image structure in which the lower half H1 of the new image P1 and the lower half H2 of the past image P2 are continuously merged. Also, the composite image data may be created using other creating methods.

In a case that vehicle speed obtained based upon pulse signals output from a vehicle speed sensor is equal to or greater than a predetermined vehicle speed, moving distance is obtained based upon the pulse signals received from the vehicle speed sensor. On the other hand, in a case that the vehicle speed is less than the aforementioned reference vehicle speed, patterns of the image data sets, which have been captured by a rear camera at different points in time, are acquired, and the moving distance is obtained based upon the patterns.

## Claims

1. A vehicle moving distance detecting method wherein, in a case that vehicle speed (Vn) obtained based upon pulse signals (PS) received from a vehicle speed sensor (10) is equal to or higher than a predetermined reference vehicle speed (Vk), moving distance (DM) is obtained based upon the pulse signals (PS) received from the vehicle speed sensor (10),
and wherein, in a case that the vehicle speed (Vn) is less than the reference vehicle speed (Vk), a plurality of image data sets, which have been captured at different points in time using an image capturing mechanism (6) provided to the vehicle (C), are acquired, and the moving distance (DM) is obtained by performing image processing for the plurality of image data sets.

2. A vehicle moving distance detecting device including a first moving distance calculating mechanism (3) for calculating the moving distance (DM) based upon pulse signals (PS) received from a vehicle speed sensor (10), comprising:
an image capturing mechanism (6) for capturing peripheral images around the vehicle (C);
a determining mechanism (3) for determining whether or not the vehicle speed (Vn) is less than a predetermined reference vehicle speed (Vk);
an image data acquisition mechanism (19) for acquiring a plurality of image data sets captured by the image capturing mechanism (6) at different points in time in a case that the determining mechanism (3) has determined that the vehicle speed (Vn) is less than the reference vehicle speed (Vk); and
a second moving distance calculating mechanism (3) for calculating the moving distance (DM) based upon the plurality of image data sets acquired by the image data acquisition mechanism (19).

3. The vehicle moving distance detecting device according to claim 2, wherein the determining mechanism (3) determines whether or not the vehicle speed (Vn) is less than the reference vehicle speed (Vk) based upon the vehicle speed detected by a vehicle speed detecting mechanism for detecting the vehicle speed based upon pulse signals received from the vehicle speed sensor (10).

4. A current vehicle position detecting method wherein, in a case that vehicle speed (Vn) obtained based upon pulse signals (PS) received from a vehicle speed sensor (10) is equal to or higher than a predetermined reference vehicle speed (Vk), moving distance (DM) is obtained based upon the pulse signals (PS) received from the vehicle speed sensor (10), and the current position (DP) of the vehicle (C) is updated based upon the moving distance (DM),
and wherein, in a case that the vehicle speed (Vn) is less than the reference vehicle speed (Vk), a plurality of image data sets, which have been captured at different points in time using an image capturing mechanism (7) provided to the vehicle, are acquired, the moving distance (DM) is obtained by performing image processing for the plurality of image data sets, and the current position (DP) of the vehicle (3) is updated based upon the moving distance (DM) thus obtained.

5. A current vehicle position detecting device including a first moving distance calculating mechanism (3) for calculating the moving distance (DM) based upon pulse signals (PS) received from a vehicle speed sensor (10), and a vehicle position calculating mechanism (3) for calculating the current position (DP) of the vehicle (C) based upon the moving distance (DM) calculated by the first moving distance calculating mechanism (3), comprising:
an image capturing mechanism (6) for capturing peripheral images around the vehicle (C);
a determining mechanism (3) for determining whether or not the vehicle speed (Vn) is less than a predetermined reference vehicle speed (Vk);
an image data acquisition mechanism (19) for acquiring a plurality of image data sets captured by the image capturing mechanism (6) at different points in time in a case that the determining mechanism (3) has determined that the vehicle speed (Vn) is less than the reference vehicle speed (Vk); and
a second moving distance calculating mechanism (3) for calculating the moving distance (DM) based upon the plurality of image data sets acquired by the image data acquisition mechanism (19), and outputting the moving distance (DM) to the vehicle position calculating mechanism (3).

6. The current vehicle position detecting device according to claim 5, wherein the detemining mechanism (3) determines whether or not the vehicle speed (Vn) is less than the reference vehicle speed (Vk) based upon the vehicle speed detected by a vehicle speed detecting mechanism for detecting the vehicle speed based upon pulse signals received from the vehicle speed sensor (10).

## Patentansprüche

1. Fahrzeugbewegungsdistanzerfassungsverfahren, wobei in einem Fall, in dem eine basierend auf von einem Fahrzeuggeschwindigkeitssensor (10) empfangenen Pulssignalen (PS) erhaltene Fahrzeuggeschwindigkeit (Vn) gleich einer vorbestimmten Referenzfahrzeuggeschwindigkeit (Vk) oder höher ist, eine Bewegungsdistanz (DM) basierend auf den von dem Fahrzeuggeschwindigkeitssensor (10) empfangenen Pulssignalen (PS) erhalten wird,
und wobei in einem Fall, in dem die Fahrzeuggeschwindigkeit (Vn) niedriger als die Referenzfahrzeuggeschwindigkeit (Vk) ist, eine Vielzahl von Bilddatensätzen bezogen werden, die bei unterschiedlichen Zeitpunkten durch Verwenden eines an dem Fahrzeug (C) bereitgestellten Bilderfassungsmechanismus (6) erfasst wurden, und die Bewegungsdistanz (DM) durch Durchführen einer Bildverarbeitung für die Vielzahl von Bilddatensätzen erhalten wird.

2. Fahrzeugbewegungsdistanzerfassungsvorrichtung mit einem ersten Bewegungsdistanzberechnungsmechanismus (3) zum Berechnen der Bewegungsdistanz (DM) basierend auf von einem Fahrzeuggeschwindigkeitssensor (10) erhaltenen Pulssignalen (PS), mit:
einem Bilderfassungsmechanismus (6) zum Erfassen von Außenbildern des Fahrzeug (C)-Umfelds,
einem Bestimmungsmechanismus (3) zum Bestimmen, ob die Fahrzeuggeschwindigkeit (Vn) niedriger als eine vorbestimmte Referenzfahrzeuggeschwindigkeit (Vk) ist oder nicht;
einem Bilddatenbeziehungsmechanismus (19) zum Beziehen einer Vielzahl von Bilddatensätzen, die durch den Bilderfassungsmechanismus (6) zu unterschiedlichen Zeitpunkten in einem Fall erfasst werden, in dem der Bestimmungsmechanismus (3) bestimmt hat, dass die Fahrzeuggeschwindigkeit (Vn) niedriger als die Referenzfahrzeuggeschwindigkeit (Vk) ist; und
einem zweiten Bewegungsdistanzberechnungsmechanismus (3) zum Berechnen der Bewegungsdistanz (DM) basierend auf der Vielzahl von durch den Bilddatenbeziehungsmechanismus (19) bezogenen Bilddatensätzen.

3. Fahrzeugbewegungsdistanzerfassungsvorrichtung gemäß Anspruch 2, wobei der Bestimmungsmechanismus (3) bestimmt, ob die Fahrzeuggeschwindigkeit (Vn) niedriger als die Referenzfahrzeuggeschwindigkeit (Vk) ist oder nicht, basierend auf der Fahrzeuggeschwindigkeit, die durch einen Fahrzeuggeschwindigkeitserfassungsmechanismus zum Erfassen der Fahrzeuggeschwindigkeit basierend auf von dem Fahrzeuggeschwindigkeitssensor (10) erhaltenen Pulssignalen erfasst wird.

4. Erfassungsverfahren einer gegenwärtigen Fahrzeugposition, wobei in einem Fall, in dem eine basierend auf von einem Fahrzeuggeschwindigkeitssensor (10) empfangenen Pulssignalen (PS) erhaltene Fahrzeuggeschwindigkeit (Vn) gleich einer vorbestimmten Referenzfahrzeuggeschwindigkeit (Vk) oder höher ist, eine Bewegungsdistanz (DM) basierend auf den von dem Fahrzeuggeschwindigkeitssensor (10) empfangenen Pulssignalen (PS) erhalten wird, und die gegenwärtige Position (DP) des Fahrzeugs (C) basierend auf der Bewegungsdistanz (DM) aktualisiert wird,
und wobei in einem Fall, in dem die Fahrzeuggeschwindigkeit (Vn) niedriger als die Referenzfahrzeuggeschwindigkeit (Vk) ist, eine Vielzahl von Bilddatensätzen, die zu unterschiedlichen Zeitpunkten durch Verwenden eines an dem Fahrzeug bereitgestellten Bilderfassungsmechanismus (7) erfasst wurden, bezogen werden, die Bewegungsdistanz (DM) durch Durchführen einer Bildverarbeitung für die Vielzahl von Bilddatensätzen erhalten wird und die gegenwärtige Position (DP) des Fahrzeugs (3) basierend auf der dadurch erhaltenen Bewegungsdistanz (DM) aktualisiert wird.

5. Erfassungseinrichtung einer gegenwärtigen Fahrzeugposition, mit einem ersten Bewegungsdistanzberechnungsmechanismus (3) zum Berechnen der Bewegungsdistanz (DM) basierend auf von einem Fahrzeuggeschwindigkeitssensor (10) erhaltenen Pulssignalen (PS), und einem Fahrzeugpositionsberechnungsmechanismus (3) zum Berechnen der gegenwärtigen Position (DP) des Fahrzeugs (C) basierend auf der durch den ersten Bewegungsdistanzberechnungsmechanismus (3) berechneten Bewegungsdistanz (DM), mit:
einem Bilderfassungsmechanismus (6) zum Erfassen von Außenbildern des Fahrzeug (C)-Umfelds;
einem Bestimmungsmechanismus (3) zum Bestimmen, ob die Fahrzeuggeschwindigkeit (Vn) niedriger als eine vorbestimmte Referenzfahrzeugsgeschwindigkeit (Vk) ist oder nicht;
einem Bilddatenbeziehungsmechanismus (19) zum Beziehen einer Vielzahl von Bilddatensätzen, die durch den Bilderfassungsmechanismus (6) zu unterschiedlichen Zeitpunkten in einem Fall erfasst werden, in dem der Bestimmungsmechanismus (3) bestimmt hat, dass die Fahrzeuggeschwindigkeit (Vn) niedriger als die Referenzfahrzeuggeschwindigkeit (Vk) ist; und
einem zweiten Bewegungsdistanzberechnungsmechanismus (3) zum Berechnen der Bewegungsdistanz (DM) basierend auf der Vielzahl von durch den Bilddatenbeziehungsmechanismus (19) bezogenen Bilddatensätzen, und zum Ausgeben der Bewegungsdistanz (DM) an den Fahrzeugpositionsberechnungsmechanismus (3).

6. Erfassungseinrichtung einer gegenwärtigen Fahrzeugposition gemäß Anspruch 5, wobei der Bestimmungsmechanismus (3) bestimmt, ob die Fahrzeuggeschwindigkeit (Vn) niedriger als die Referenzfahrzeuggeschwindigkeit (Vk) ist oder nicht, basierend auf der Fahrzeuggeschwindigkeit, die durch einen Fahrzeuggeschwindigkeitserfassungsmechanismus zum Erfassen der Fahrzeuggeschwindigkeit basierend auf von dem Fahrzeuggeschwindigkeitssensor (10) erhaltenen Pulssignalen erfasst wird.

## Revendications

1. Procédé de détection de la distance de déplacement d'un véhicule dans lequel, dans un cas dans lequel la vitesse du véhicule (Vn) obtenue sur la base de signaux impulsionnels (PS) reçus d'un capteur de vitesse du véhicule (10) est égale ou supérieure à une vitesse de véhicule de référence prédéterminée (Vk), la distance de déplacement (DM) est obtenue sur la base des signaux impulsionnels (PS) reçus depuis le capteur de vitesse de véhicule (10),
et dans lequel, dans un cas dans lequel la vitesse du véhicule (Vn) est inférieure à la vitesse de véhicule de référence (Vk), une pluralité d'ensembles de données d'images, qui ont été capturées à différents points dans le temps en utilisant un mécanisme de capture d'images (6) prévu sur le véhicule (C), sont obtenus, et la distance de déplacement (DM) est obtenue en exécutant un traitement d'images pour la pluralité d'ensembles de données d'images.

2. Dispositif de détection de distance de déplacement d'un véhicule comprenant un premier mécanisme de calcul de distance de déplacement (3) destiné à calculer la distance de déplacement (DM) sur la base de signaux impulsionnels (PS) reçus depuis un capteur de vitesse de véhicule (10), comprenant :
un mécanisme de capture d'images (6) destiné à capturer des images périphériques autour du véhicule (C) ;
un mécanisme de détermination (3) destiné à déterminer si oui ou non la vitesse du véhicule (Vn) est inférieure à une vitesse de véhicule de référence prédéterminée (Vk) ;
un mécanisme d'acquisition de données d'images (19) destiné à obtenir une pluralité d'ensembles de données d'images capturées par ledit mécanisme de capture d'images (6) à différents points dans le temps dans un cas dans lequel le mécanisme de détermination (3) a déterminé que la vitesse du véhicule (Vn) est inférieure à la vitesse de véhicule de référence (Vk) ; et
un deuxième mécanisme de calcul de distance de déplacement (3) destiné à calculer la distance de déplacement (DM) sur la base de la pluralité d'ensembles de données d'images obtenus par le mécanisme d'acquisition de données d'images (19).

3. Dispositif de détection de distance de déplacement de véhicule selon la revendication 2, dans lequel le mécanisme de détermination (3) détermine si oui ou non la vitesse du véhicule (Vn) est inférieure à la vitesse de véhicule de référence (Vk) sur la base de la vitesse de véhicule détectée par un mécanisme de détection de vitesse de véhicule destiné à détecter la vitesse du véhicule sur la base de signaux impulsionnels reçus du capteur de vitesse de véhicule (10).

4. Procédé de détection de la position actuelle d'un véhicule dans lequel, dans un cas dans lequel la vitesse du véhicule (Vn) obtenue sur la base de signaux impulsionnels (PS) reçus d'un capteur de vitesse de véhicule (10) est égale ou supérieure à une vitesse de véhicule de référence prédéterminée (Vk), la distance de déplacement (DM) est obtenue sur la base de signaux impulsionnels (PS) reçus du capteur de vitesse de véhicule (10), et la position actuelle (DP) du véhicule (C) est mise à jour sur la base de la distance de déplacement (DM),
et dans lequel, dans un cas dans lequel la vitesse du véhicule (Vn) est inférieure à la vitesse de véhicule de référence (Vk), une pluralité d'ensembles de données d'images, qui ont été capturées à différents points dans le temps en utilisant un mécanisme de capture d'images (7) prévu sur le véhicule, sont obtenus, la distance de déplacement (DM) est obtenue en exécutant un traitement d'images pour la pluralité d'ensembles de données d'images, et la position actuelle (DP) du véhicule (3) est mise à jour sur la base de la distance de déplacement (DM) ainsi obtenue.

5. Dispositif de détection de la position actuelle d'un véhicule comprenant un premier mécanisme de calcul de distance de déplacement (3) destiné à calculer la distance de déplacement (DM) sur la base de signaux impulsionnels (PS) reçus d'un capteur de vitesse de véhicule (10), et un mécanisme de calcul de position de véhicule (3) destiné à calculer la position actuelle (DP) du véhicule (C) sur la base de la distance de déplacement (DM) calculée par le premier mécanisme de calcul de distance de déplacement (3), comprenant :
un mécanisme de capture d'images (6) destiné à capturer les images périphériques autour du véhicule (C) ;
un mécanisme de détermination (3) destiné à déterminer si oui ou non la vitesse du véhicule (Vn) est inférieure à une vitesse de véhicule de référence prédéterminée (Vk) ;
un mécanisme d'acquisition de données d'images (19) destiné à obtenir une pluralité d'ensembles de données d'images capturées par le mécanisme de capture d'images (6) à différents points dans le temps dans un cas dans lequel le mécanisme de détermination (3) a déterminé que la vitesse du véhicule (Vn) est inférieure à la vitesse de véhicule de référence (Vk) ; et
un deuxième mécanisme de calcul de distance de déplacement (3) destiné à calculer la distance de déplacement (DM) sur la base de la pluralité d'ensembles de données d'images obtenues par le mécanisme d'acquisition de données d'images (19), et destiné à délivrer en sortie la distance de déplacement (DM) vers le mécanisme de calcul de position de véhicule (3).

6. Dispositif de détection de la position actuelle d'un véhicule selon la revendication 5, dans lequel le mécanisme de détermination (3) détermine si oui ou non la vitesse du véhicule (Vn) est inférieure à la vitesse de véhicule de référence (Vk) sur la base de la vitesse de véhicule détectée par un mécanisme de détection de vitesse de véhicule destiné à détecter la vitesse du véhicule sur la base de signaux impulsionnels reçus du capteur de vitesse de véhicule (10).
